# EUROPEAN PATENT APPLICATION

(11) **EP 3 929 402 A1**
(43) Date of publication of application: **29.12.2021**
(21) Application number: 21185358.5
(22) Date of filing: 19.04.2013
(51) Int. Cl.: F01D 5/12, F01D 5/18, F01D 9/00, F02C 7/12, B22F 5/10, B22C 7/02, B22C 9/04, B22C 9/10, B22F 3/105, C22C 28/00, B33Y 10/00, B33Y 80/00, B22F 10/20, B22C 9/24

(54) **GAS TURBINE ENGINE AIRFOIL GEOMETRIES AND CORES FOR MANUFACTURING PROCESS**

(30) Priority: 24.04.2012 US 201213454221
(62) Divisional of application: 13781870.4
(71) Applicant: Raytheon Technologies Corporation, Farmington, CT 06032 (US)
(72) Inventor: PROPHETER-HINCKLEY, Tracy A., Manchester, 06042 (US); ZELESKY, Mark F., Bolton, 06043 (US); MONGILLO, JR, Dominic J., West Hartford, 06107 (US); DEVORE, Matthew A., Cromwell, 06416 (US); GAUTSCHI, Steven Bruce, Naugatuck, 06770 (US); FISK, Benjamin T., East Granby, 06026 (US)
(74) Representative: Dehns

(57) **Abstract**

A core (340) for an airfoil (26; 226; 326) includes a refractory metal structure having a variable thickness. An airfoil (26; 226; 326) includes a body having leading and trailing edges (30, 32) joined by spaced apart pressure and suction sides (34, 36) to provide an exterior airfoil surface (38; 360) defined by a perimeter wall (76). An interior wall (78) is arranged interiorly and adjacent to the perimeter wall (76) to provide a cooling passage (253; 66, 68, 70) there between. A cooling passage (253; 66, 68, 70) with first and second portions (62, 64) is tapered and respectively has first and second thicknesses (242, 244). The first thickness (242) is greater than the second thickness (244), and the second thickness (244) is less than 0.060 inch (1.52 mm). A method of manufacturing a refractory metal core (340) includes depositing multiple layers of powdered metal onto one another, joining the layers to one another with reference to CAD data relating to a particular cross-section of a refractory metal core (340), and producing the core (340) having a variable thickness.

## Description

### BACKGROUND

This disclosure relates to an airfoil for a gas turbine engine. In particular, the disclosure relates to airfoil geometry and cooling features and an example core manufacturing process that produces a core providing such features.

Airfoils, particularly those used in a hot section of a gas turbine engine, incorporate internal cooling features. Current airfoil manufacturing techniques limit possible cooling configurations. Typically, the airfoil is cast within a mold having at least first and second portions secured to one another to define an exterior airfoil surface. The core structure used to form the impingement holes and cooling passages must be retained between the mold portions, which limits the location and configuration of the core, which is quite fragile. The core is typically assembled from multiple elements constructed from different material. The elements are glued to one another through a painstaking assembly process, which may result in scrapped cores.

Core elements of 0.012 - 0.030 inch (0.30 - 0.76 mm) may be used to produce microcircuits. These core elements must be glued to other core elements of at least 0.060 inch (1.52 mm). A channel in the thicker element must be provided to receive an end of the thinner element, which also results in an abrupt transition with no taper, bell mouth or smooth transition.

### SUMMARY

In one exemplary embodiment, a core for an airfoil includes a refractory metal structure having a variable thickness.

In a further embodiment of any of the above, the structure includes molybdenum.

In a further embodiment of any of the above, the structure is defined by an exterior surface providing a contour, the exterior surface including a uniform surface finish.

In a further embodiment of any of the above, the structure includes a radiused edge.

In a further embodiment of any of the above, exterior surface is without machining.

In a further embodiment of any of the above, a coating is adhered to the exterior surface.

In a further embodiment of any of the above, the structure is defined by an exterior surface including a perimeter, and includes a recess inboard of the perimeter.

In a further embodiment of any of the above, the structure is defined by an exterior surface including a perimeter, and includes a protrusion inboard of the perimeter.

In a further embodiment of any of the above, the thickness is less than 0.060 inch (1.52 mm) at a location.

In a further embodiment of any of the above, the thickness is less than 0.020 inch (0.51 mm) at the location.

In a further embodiment of any of the above, the structure is tapered between first and second portions, with the second portion less than 0.020 inch (0.51 mm).

In a further embodiment of any of the above, the first portion is greater than 0.020 inch (0.51 mm).

In a further embodiment of any of the above, the structure is a unitary body having uniform material properties throughout the structure. The structure has at least one portion with a thickness of less than 0.060 inch (1.52 mm), and the structure includes first and second portions in spaced apart and overlapping relationship with one another.

In a further embodiment of any of the above, the structure includes a standoff interconnecting the first and second portions.

In a further embodiment of any of the above, one of the first and second portions has a thickness of less than 0.060 inch (1.52 mm).

In another example embodiment, an airfoil for a gas turbine engine includes a body having leading and trailing edges joined by spaced apart pressure and suction sides to provide an exterior airfoil surface defined by a perimeter wall. An interior wall is arranged interiorly and adjacent to the perimeter wall to provide a cooling passage there between. A cooling passage with first and second portions is tapered and respectively has first and second thicknesses. The first thickness is greater than the second thickness, and the second thickness is less than 0.060 inch (1.52 mm).

In a further embodiment of any of the above, the second portion includes a radiused edge.

In a further embodiment of any of the above, the second portion includes a recess providing a thickness less than the second thickness.

In a further embodiment of any of the above, the second portion includes a protrusion providing a thickness greater than the second thickness.

In a further embodiment of any of the above, the second portion includes third and forth portions extending generally in a chordwise direction and overlapping one another.

In a further embodiment of any of the above, the third and fourth portions are joined to one another by interconnecting holes.

In another example embodiment, an airfoil for a gas turbine engine includes a body including leading and trailing edges joined by spaced apart pressure and suction sides to provide an exterior airfoil surface defined by a perimeter wall. An interior wall is arranged interiorly and adjacent to the perimeter wall to provide first, second and third cooling passages there between. The first and second cooling passages have a thickness of greater than 0.060 inch (1.52 mm), and the third cooling passage interconnects the first and second cooling passages and has a thickness of less than 0.060 inch (1.52 mm).

In a further embodiment of any of the above, the first cooling passage is arranged adjacent to the perimeter wall at the leading edge.

In another embodiment, a method of manufacturing a refractory metal core for an airfoil includes the steps of depositing multiple layers of powdered metal onto one another, joining the layers to one another with reference to CAD data relating to a particular cross-section of a refractory metal core, and producing the core having a variable thickness.

In a further embodiment of any of the above, the core includes molybdenum.

In a further embodiment of any of the above, the thickness is less than 0.060 inch (1.52 mm) at a location.

In a further embodiment of any of the above, the thickness is less than 0.020 inch (0.51 mm) at the location.

In a further embodiment of any of the above, the core is a unitary body having uniform material properties throughout the core. The core has at least one portion with a thickness of less than 0.060 inch (1.52 mm). The core includes first and second portions in spaced apart and overlapping relationship with one another.

In a further embodiment of any of the above, the core includes a standoff interconnecting the first and second portions.

### BRIEF DESCRIPTION OF THE DRAWINGS

The disclosure can be further understood by reference to the following detailed description when considered in connection with the accompanying drawings wherein:
Figure 1 is a schematic view of a gas turbine engine incorporating the disclosed airfoil.
Figure 2A is a perspective view of the airfoil having the disclosed cooling passage.
Figure 2B is a plan view of the airfoil illustrating directional references.
Figure 3A is a partial cross-sectional view of an example core.
Figure 3B is a perspective view of a portion of an airfoil with the core of Figure 3A.
Figure 3C is a perspective view of the airfoil of Figure 3B without the core.
Figure 3D is a cross-sectional view of the airfoil of Figure 3C.
Figure 4 is a perspective view of another example core.
Figure 5A is a cross-sectional view of a portion of another example core and airfoil.
Figure 5B is a cross-sectional view of the airfoil shown in Figure 5A without the core.
Figure 6A is a cross-sectional view of another example core and airfoil.
Figure 6B is a perspective view of a portion of the core shown in Figure 6A.
Figure 7 is a cross-sectional view of another example core and airfoil.
Figure 8 is a cross-sectional view of another example core and airfoil.
Figure 9 is a flow chart depicting an example refractory metal core manufacturing process.
Figure 10 is a flow chart depicting an example airfoil manufacturing process.

### DETAILED DESCRIPTION

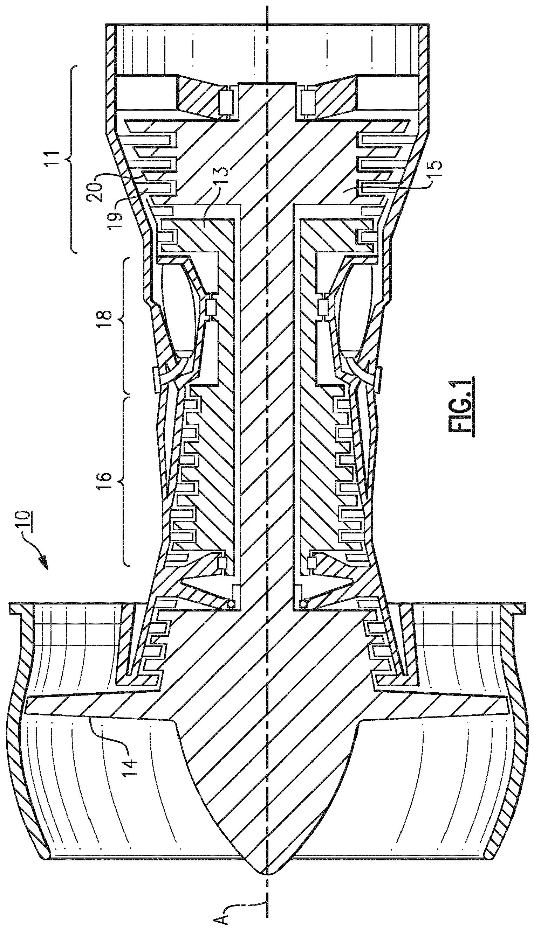

Figure 1 schematically illustrates a gas turbine engine 10 that includes a fan 14, a compressor section 16, a combustion section 18 and a turbine section 11, which are disposed about a central axis A. As known in the art, air compressed in the compressor section 16 is mixed with fuel that is burned in combustion section 18 and expanded in the turbine section 11. The turbine section 11 includes, for example, rotors 13 and 15 that, in response to expansion of the burned fuel, rotate, which drives the compressor section 16 and fan 14.

The turbine section 11 includes alternating rows of blades 20 and static airfoils or vanes 19. It should be understood that Figure 1 is for illustrative purposes only and is in no way intended as a limitation on this disclosure or its application.

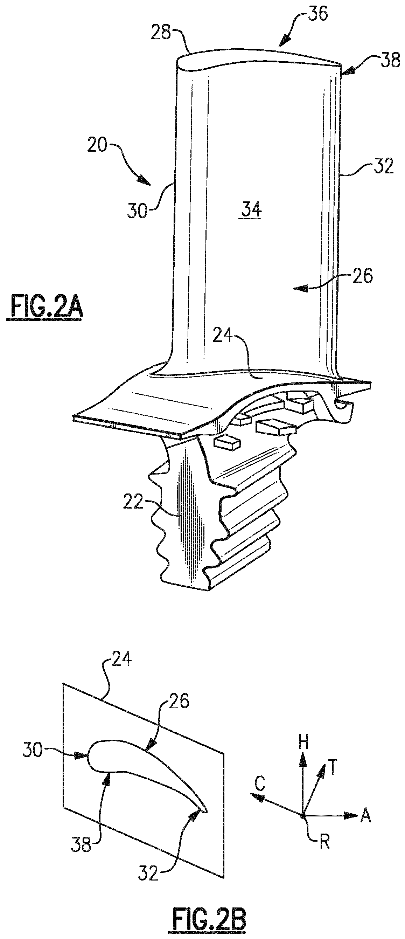

An example blade 20 is shown in Figure 2A. The blade 20 includes a platform 24 supported by a root 22, which is secured to a rotor, for example. An airfoil 26 extends radially outwardly from the platform 24 opposite the root 22 to a tip 28. While the airfoil 26 is disclosed as being part of a turbine blade 20, it should be understood that the disclosed airfoil can also be used as a vane.

Referring to Figure 2B, the airfoil 26 includes an exterior airfoil surface 38 extending in a chord-wise direction C from a leading edge 30 to a trailing edge 32. The airfoil 26 extends between pressure and suction sides 34, 36 in an airfoil thickness direction T, which is generally perpendicular to the chord-wise direction C. Multiple airfoils 26 are arranged circumferentially in a circumferential direction H. The airfoil 26 extends from the platform 24 in a radial direction R to the tip 28. The exterior airfoil surface 38 may include multiple film cooling holes.

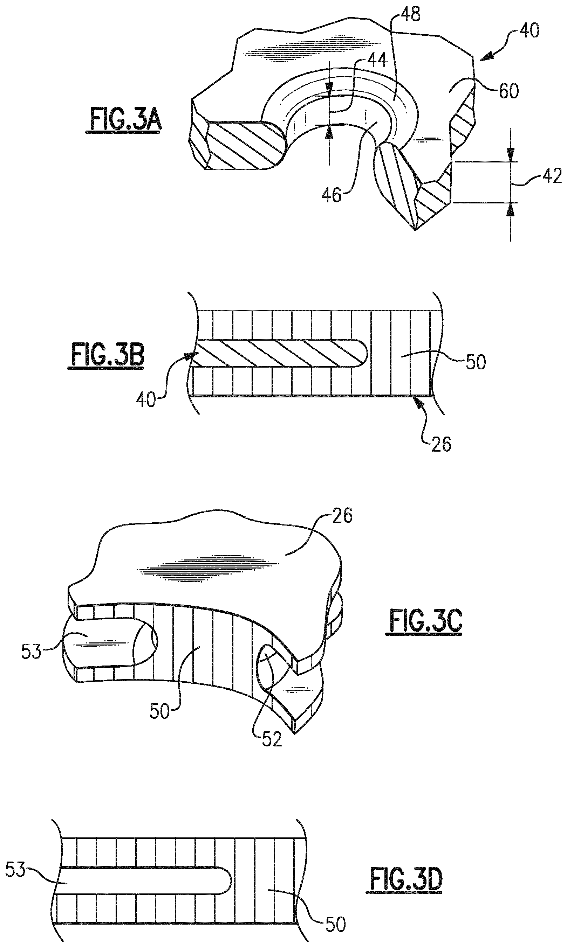

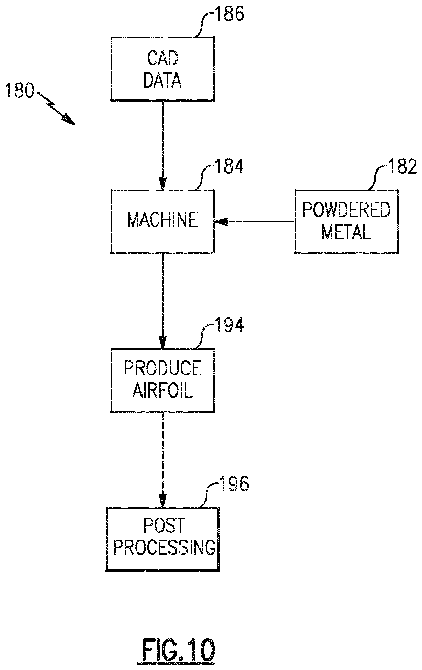

An example core 40 and resultant airfoil 26 is shown in Figures 3A-3D. As described in relation to Figure 10, the airfoils disclosed may also be manufactured directly without the need of a core. In direct airfoil manufacturing, the airfoil features described as being provided by a core can be provided in the airfoil during the airfoil forming process.

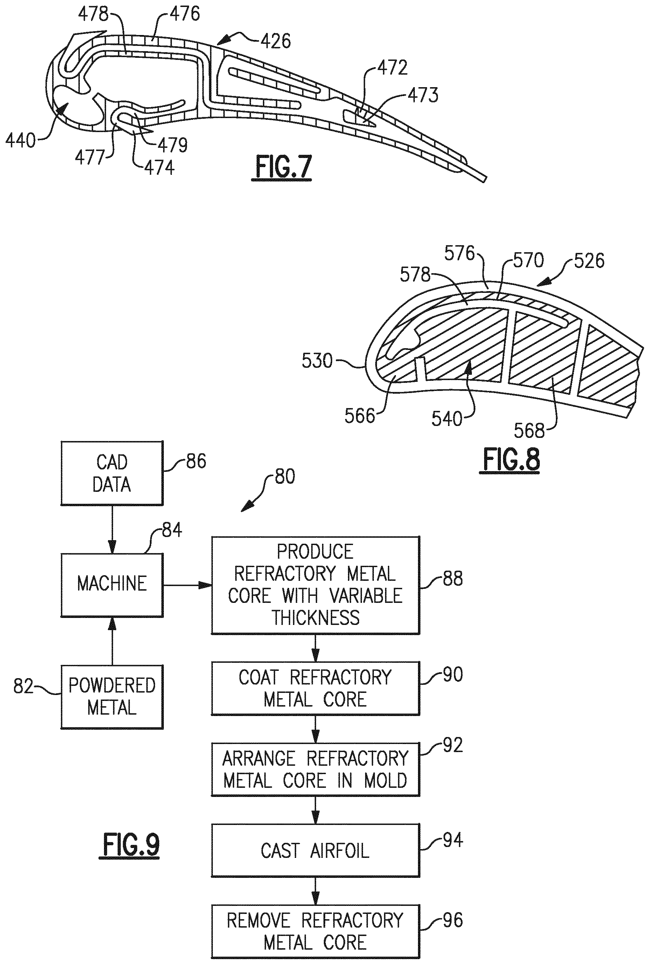

The core 40 is provided by a refractory metal structure, constructed from molybdenum, for example, having a variable thickness. The core 40 is defined by an exterior surface 60 providing a contour. The exterior surface 60 including a uniform surface finish from the core manufacturing process, described in connection with Figure 9 below, which results in a surface roughness to which suitable coatings will adhere. The exterior surface 60 is without machining, that is, milling, chemical etch, filing, or sanding. However, the exterior surface 60 may be finished in a slurry. As a result, coatings will adhere to the edges of the core 40.

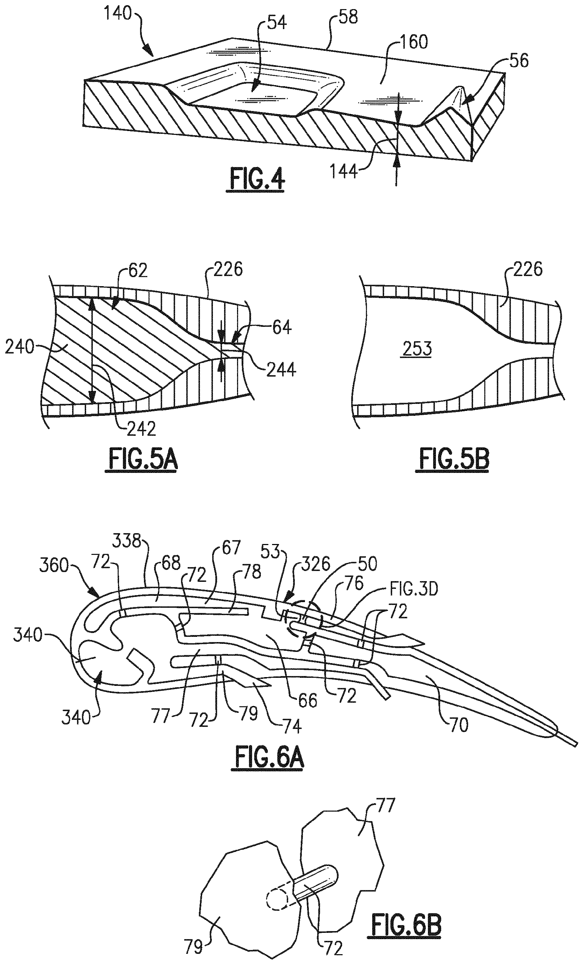

In the example, first and second thicknesses 42, 44 are different than one another. In one example, the first thickness 42 is less than 0.060 inch (1.52 mm). The core 40 may include an aperture 46 with a radiused edge 48 providing the second thickness 44 of less 0.020 inch (0.51 mm), for example. The cast airfoil 26 provides a cooling passage 53 and standoff 50 corresponding to the aperture 46. The standoff 50 illustrated in Figure 3D is shown in the area indicated in Figure 6A.

Referring to Figure 4, the core 140 includes an exterior surface 160 having a perimeter 58. A recess 54 may be arranged inboard of the perimeter 58, for example. In another example, a protrusion 56 is arranged inboard of the perimeter 58. The recess 54 and protrusion 56 are not machined. The thickness of the core 140 surrounding the recess 54 and protrusion 56 is less than 0.060 inch (1.52 mm) in one example, and less than 0.020 inch (0.51 mm) in another example.

In another example shown in Figures 5A-5B, the core 240 may be used to produce an airfoil 226 including a cooling passage 253 having a tapered wall. The core 240 is tapered between first and second portions 62, 64 with the second portion 64 having a second thickness 244 less than 0.020 inch (0.51 mm). The first portion 62 has a first thickness 242 that is greater than 0.020 inch (0.51 mm).

Referring to Figures 6A-6B, which depicts a core within an airfoil, the exterior airfoil surface 360 is defined by a perimeter wall 76. First, second and third cooling passages 66, 68, 70 are provided within the airfoil 326, for example. An interior wall 78 is arranged interiorly and adjacent to the perimeter wall 76 to provide the second cooling passage 67, for example. A cooling passage, for example, first cooling passage 66 is tapered and respectively has different thickness, for example, as described above with respect to Figures 5A and 5B. At least one of the passages, for example, second passage 67, may include a thickness less than 0.060 inch (1.52 mm). The cooling passages are formed by correspondingly shaped core structure. The core 340 is provided by a unitary structure having uniform material properties, for example. That is, multiple core elements constructed from different core materials glued to one another need not be used.

The core 340 may include first and second portions 77, 79 overlapping one another. The first and second portions 77, 79 are less than 0.060 inch (1.52 mm) thick, in one example, and of varying thickness. At least one of the first and second portions 77, 79 may provide a film cooling hole 74 in the exterior airfoil surface 360. The first and second portions 77, 79 may be joined to one another by a standoff 72 that produces a hole interconnecting the resultant overlapping cooling passages. Standoffs 72 can be used to integrally connect and join all passages 66, 68, 70 to eliminate the need for core assembly and better stabilize the core during casting. However, directly manufacturing the airfoil, as shown in Figure 10, would not require these features.

Similarly, a unitary body having uniform material properties throughout the structure provides the cores 440, 540 shown in Figures 7 and 8. The core 440, 540 have at least one portion with a thickness of less than 0.060 inch (1.52 mm). Referring to the airfoil 426 of Figure 7, the perimeter wall 476 defines first and second cooling passages 477, 479 with the interior wall 478. The first and second cooling passages 477, 479 are arranged in a switch back configuration, and one of the passages may provide a film cooling hole 474. The standoff 472 interconnects a central wall 473, which splits the channel to increase hot wall contact and maintain flow speed and pressure.

Referring to the airfoil 526 of Figure 8, the first cooling passage 566 is arranged adjacent to the perimeter wall 576 at the leading edge 530. The third cooling passage 570 is arranged between the perimeter wall 576 and the interior wall 578 to provide a microcircuit of less than 0.060 inches (1.52 mm) thickness, interconnecting the first and second cooling passages 566, 568 to one another.

The core geometries and associated airfoil cooling passages disclosed in Figures 3A-8 may be difficult to form using conventional casting technologies. Thus, an additive manufacturing process 80 may be used, as schematically illustrated in Figure 9. Powdered metal 82 suitable for refractory metal core applications, such as molybdenum, is fed to a machine 84, which may provide a vacuum, for example. The machine 84 deposits multiple layers of powdered metal onto one another. The layers are joined to one another with reference to CAD data 86, which relates to a particular cross-section of the core 40. In one example, the powdered metal 82 may be melted using a direct metal laser sintering process or an electron-beam melting process. With the layers built upon one another and joined to one another cross-section by cross-section, a core with the above-described geometries may be produced, as indicated at 88. A single piece core can be produced that requires no assembly and can be directly placed into a mold after being coated with wax.

The coating 90 may be applied to the exterior surface of the core 40, which enables the core 40 to be more easily removed subsequently. The core 40 is arranged in a multi-piece mold and held in a desired orientation by features on the mold, as indicated at 92. The core 40 is more robust and can better withstand handling as it is positioned within the mold. The airfoil 26 is cast about the core 40, as indicated at 94. The core 40 is then removed from the airfoil 26, as indicated at 96, to provide desired cooling passage features.

An additive manufacturing process 180 may be used to produce an airfoil, as schematically illustrated in Figure 10. Powdered metal 182 suitable for aerospace airfoil applications is fed to a machine 184, which may provide a vacuum, for example. The machine 184 deposits multiple layers of powdered metal onto one another. The layers are joined to one another with reference to CAD data 186, which relates to a particular cross-section of the airfoil 20. In one example, the powdered metal 182 may be melted using a direct metal laser sintering process or an electron-beam melting process. With the layers built upon one another and joined to one another cross-section by cross-section, an airfoil with the above-described geometries may be produced, as indicated at 194. The airfoil may be post-processed 196 to provide desired structural characteristics. For example, the airfoil may be heated to reconfigure the joined layers into a single crystalline structure.

Although an example embodiment has been disclosed, a worker of ordinary skill in this art would recognize that certain modifications would come within the scope of the claims. For that reason, the following claims should be studied to determine their true scope and content.

## Claims

1. An airfoil (26; 226; 326) for a gas turbine engine (10), comprising:
a body including leading and trailing edges (30, 32) joined by spaced apart pressure and suction sides (34, 36) to provide an exterior airfoil surface (38; 360) defined by a perimeter wall (76), an interior wall (78) arranged interiorly and adjacent to the perimeter wall (76) to provide a cooling passage there between, a cooling passage (253; 66, 68, 70) with first and second portions (62, 64) tapered and respectively having first and second thicknesses (242, 244), the first thickness (242) greater than the second thickness (244), and the second thickness (244) less than 0.060 inch (1.52 mm).

2. The airfoil according to claim 1, wherein the second portion (64) includes a radiused edge.

3. The airfoil according to claim 1 or 2, wherein the second portion (64) includes a recess providing a thickness less than the second thickness (244).

4. The airfoil according to claim 1, 2 or 3, wherein the second portion (64) includes a protrusion providing a thickness greater than the second thickness (244).

5. The airfoil according to any preceding claim, wherein the second portion (64) includes third and fourth portions (77, 79) extending generally in a chordwise direction and overlapping one another.

6. The airfoil according to claim 5, wherein the third and fourth portions (77, 79) are joined to one another by interconnecting holes (72).

7. An airfoil (26; 226; 326) for a gas turbine engine (10), comprising:
a body including leading and trailing edges (30, 32) joined by spaced apart pressure and suction sides (34, 36) to provide an exterior airfoil surface (38; 360) defined by a perimeter wall (76), an interior wall (78) arranged interiorly and adjacent to the perimeter wall (76) to provide first, second and third cooling passages (66, 68, 70) there between, the first and second cooling passages (68, 70) having a thickness of greater than 0.060 inch (1.52 mm), and the third cooling passage (66) interconnecting the first and second cooling passages (68, 70) and having a thickness of less than 0.060 inch (1.52 mm).

8. The airfoil according to claim 7, wherein the first cooling passage (68) is arranged adjacent to the perimeter wall (76) at the leading edge (30).

9. A core for an airfoil comprising:
a refractory metal structure having a variable thickness, wherein, optionally, the structure includes molybdenum and/or the thickness is less than 0.060 inch (1.52 mm) or less than 0.020 inch (0.51 mm) at a location.

10. The core according to claim 9, wherein the structure is defined by an exterior surface providing a contour, the exterior surface including a uniform surface finish, wherein, optionally, the structure include a radiused edge, and/or the exterior surface is without machining, and/or the core comprising a coating adhered to the exterior surface.

11. The core according to claim 9 or 10, wherein the structure is defined by an or the exterior surface including a perimeter, and includes a recess inboard of the perimeter and/or a protrusion inboard of the perimeter.

12. The core according to claim 9, 10 or 11, wherein the structure is tapered between first and second portions, with the second portion less than 0.020 inch (0.51 mm), wherein, optionally, the first portion is greater than 0.020 inch (0.51 mm).

13. The core according to any of claims 9 to 12, wherein the structure is a unitary body having a uniform material properties throughout the structure, the structure having at least one portion with a thickness of less than 0.060 inch (1.52 mm), the structure including first and second portions in spaced apart and overlapping relationship with one another, wherein, optionally, the structure includes a standoff interconnecting the first and second portions, and/or one of the first and second portions has a thickness of less than 0.060 inch (1.52 mm).

14. A method of manufacturing an refractory metal core for an airfoil, comprising the steps of:
depositing multiple layers of powdered metal onto one another;
joining the layers to one another with reference to CAD data relating to a particular cross-section of a refractory metal core; and
producing a core having a variable thickness,
wherein, optionally, the core includes molybdenum, and/or the thickness is less than 0.060 inch (1.52 mm) or less than 0.020 inch (0.51 mm) at a location.

15. The method according to claim 14, wherein the core is a unitary body having a uniform material properties throughout the core, the core having at least one portion with a thickness of less than 0.060 inch (1.52 mm), the core including first and second portions in spaced apart and overlapping relationship with one another, and, optionally, wherein the core includes a standoff interconnecting the first and second portions.
